**Europäisches Patentamt**

**European Patent Office**

**Office européen des brevets**

(19)

(11) Numéro de publication : **0 437 130 A1**

(12)

# DEMANDE DE BREVET EUROPEEN

(21) Numéro de dépôt : **90403619.1**

(22) Date de dépôt : **17.12.90**

(51) Int. Cl.⁵ : **B60N 2/38**

(30) Priorité : **19.12.89 FR 8916838**

(43) Date de publication de la demande :
**17.07.91 Bulletin 91/29**

(84) Etats contractants désignés :
**AT BE DE ES GB IT NL**

(71) Demandeur : **Molinier, André**
**61 rue Perronet**
**F-92200 Neuilly Sur Seine (FR)**

(72) Inventeur : **Molinier, André**
**61 rue Perronet**
**F-92200 Neuilly Sur Seine (FR)**

(54) **Dispositif de support de siège oscillant avec suspension hydropneumatique pour véhicule tout terrain.**

(57) Un dispositif de limitation du débattement latéral du siège lorsque l'utilisateur se penche d'un côté ou de l'autre pour procéder à des manoeuvres d'utilisation de l'appareillage du véhicule, constitué d'une pièce suspendue libre (23) par biellettes (18) articulés à deux axes (19) aménagés à la partie supérieure de la pièce oscillante (3) et également à la partie supérieure d'une plaque rapportée (21) suspendue aux biellettes par 4 goujons (22) à la manière d'un parallélogramme déformable.

La dite pièce (23) comportant une surface supérieure incurvée pourvue d'une denture (20) coopérant avec celle inférieure d'un secteur (11) solidaire de la pièce fixe.

Les surfaces latérales du secteur (11) formant surface de friction aux plaquettes (14) du dispositif ralentisseur d'oscillations.

Le cylindre de suspension (6) est relié à une pompe (8) elle même reliée à un réservoir à liquide permettant de faire varier le volume de gaz contenu dans l'accumulateur (7) en introduisant le liquide de compression assurant ainsi la commande de maintien d'assiette.

EP 0 437 130 A1

Jouve, 18, rue Saint-Denis, 75001 PARIS

# DISPOSITIF DE SUPPORT DE SIEGE OSCILLANT AVEC SUSPENSION HYDROPNEUMATIQUE POUR VEHICULE TOUT TERRAIN

La présente invention concerne des systèmes équipant le support de siège ou siège d'un véhicule motorisé ou non, utilisé en travaux publics, en exploitation agricole, en exploitation industrielle ou autres, afin de conserver une position horizontale quelle que soit l'inclinaison latérale du véhicule, et comportant un système de guidage, une suspension, un freinage d'oscillations.

Il existe différents dispositifs de stabilisation faisant l'objet de brevets qui sont équipés ou non d'une suspension, et lorsqu'ils le sont celle ci est le plus souvent assurée par ressorts complétée par des amortisseurs montés dans la pièce fixe solidaire du véhicule. Les amortisseurs dans ce cas servant ainsi de freinage aux oscillations.

On connaît également un dispositif à stabilisation pendulaire objet du brevet Français FR-A-2 603 533 des présents demandeurs composé de 2 pièces en forme de U, articulées l'une par rapport à l'autre à la partie supérieure du U par un axe.

L'une est fixée sur le véhicule ou une assise du véhicule, l'autre oscillante à mouvement libre pivotant sur les axes de rotation qui leur sont communs.

Cette dernière est équipée de moyens de guidage, de suspension par moyens hydropneumatiques et de freinage d'oscillations par système à friction.

Le système de suspension ainsi conçu n'est modulable en fonction du poids de l'utilisateur que par la longueur de sa course et ne permet pas d'assurer une assiette constante si le poids varie.

Le système de freinage qui peut assurer le blocage du mouvement de la pièce libre ne le permet que sur intervention de l'intéressé, les butées de débattement n'agissant qu'en fin de course du mouvement.

La présente invention a pour but de remédier à ces inconvénients et résoud le problème en utilisant un dispositif de sécurité permettant de prévenir tout mouvement intempestif de l'utilisateur, assis sur le siège solidaire de la pièce libre.

Il permet aussi de disposer d'une suspension extrémement souple, à niveau constant par moyen d'apport de liquide dans un accumulateur, créant une pression d'équilibre.

Les avantages obtenus grâce à cette invention consistent essentiellement à préserver le conducteur du véhicule qui peut se pencher à droite ou à gauche de son siège, pour effectuer une manoeuvre commandant l'appareillage dont son véhicule est équipé, sans craindre le basculement.

De même grâce à sa position d'assise constante, les différentes manoeuvres de conduite sont toujours exécutées au même niveau.

Ces différents perfectionnements apportés au dispositif de support de siège ainsi que la modification de son système de freinage apporte des améliorations importantes d'utilisation.

Dispositif de support de siège pour véhicule tout terrain, ou autres, permettant au conducteur de conserver une station horizontale constante quelle que soit l'inclinaison latérale du véhicule par système à stabilisation pendulaire comportant d'une part, une pièce support d'ensemble destinée à être fixée au chassis ou à une assise du véhicule, et une pièce oscillante aménagée à l'intérieur de la pièce support d'ensemble, reliées entre elles par articulation de pivotement, situé à la partie supérieure des 2 pièces en forme de U, et d'autre part d'une suspension de type hydropneumatique combiné ou non avec des moyens de guidage en coulissement vertical ; d'un système ralentisseur d'oscillations interposé entre les deux ensembles. Ce dernier peut être couplé ou non à un dispositif de limitation de débattement par rapport à l'horizontale, constitué d'une pièce équipée de quatre goujons suspendue libre par quatre biellettes articulées à deux axes aménagés à la partie supérieure de la pièce oscillante et d'une plaque rapportée, à la manière d'un parallélogramme déformable.

La dite pièce comportant une surface supérieure incurvée pourvue d'une denture coopérant avec la denture inférieure d'un secteur solidaire de la pièce fixe. La partie incurvée de la pièce oscillante et le secteur étant centré sur l'axe de rotation de l'ensemble.

L'invention est exposée ci aprés, plus en détail à l'aide de dessins représentant seulement un mode d'exécution.

La figure 1 représente l'ensemble vue en coupe selon CC de la figure 2 avec dispositif de limitation de débattement réalisé conformément à la présente invention.

La figure 2 représente une vue d'ensemble en coupe verticale selon BB de la figure 1 du support de siège équipé de son cylindre de suspension, du guidage, du ralentisseur d'oscillations et du limiteur de débattement.

La figure 3 représente une coupe selon AA de la figure 1 des dispositifs dans la pièce oscillante : le dispositif limiteur de débattement au repos.

La figure 4 représente une coupe selon AA de la figure 1 des dispositif dans la pièce oscillante : le dispositif limiteur de débattement au travail.

La figure 5 représente une coupe selon AA de la figure 1 des dispositifs dans la pièce oscillante : le dispositif ralentisseur d'oscillations.

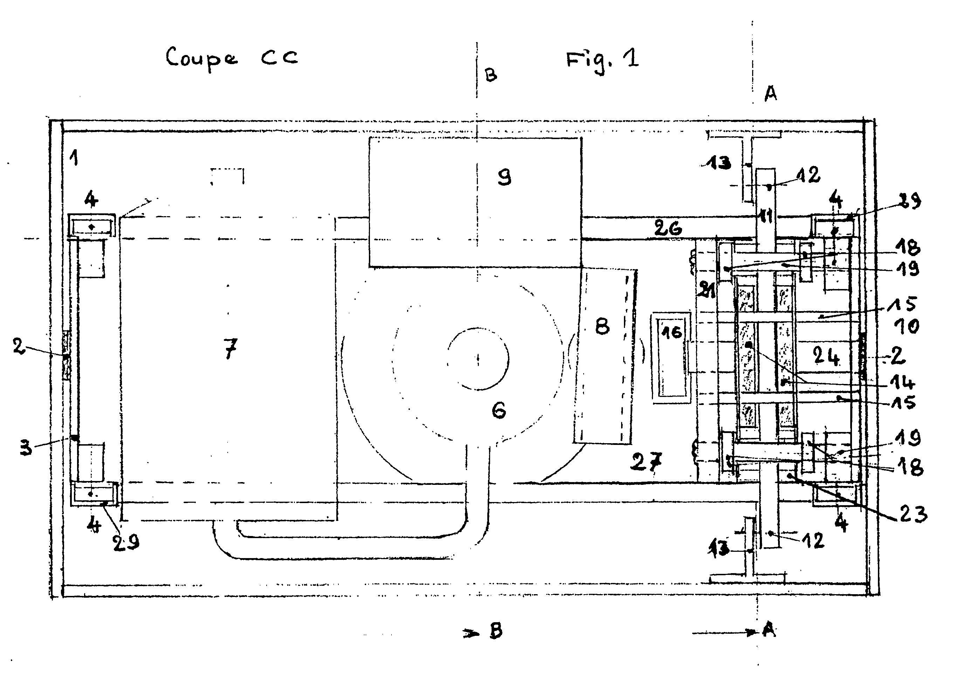

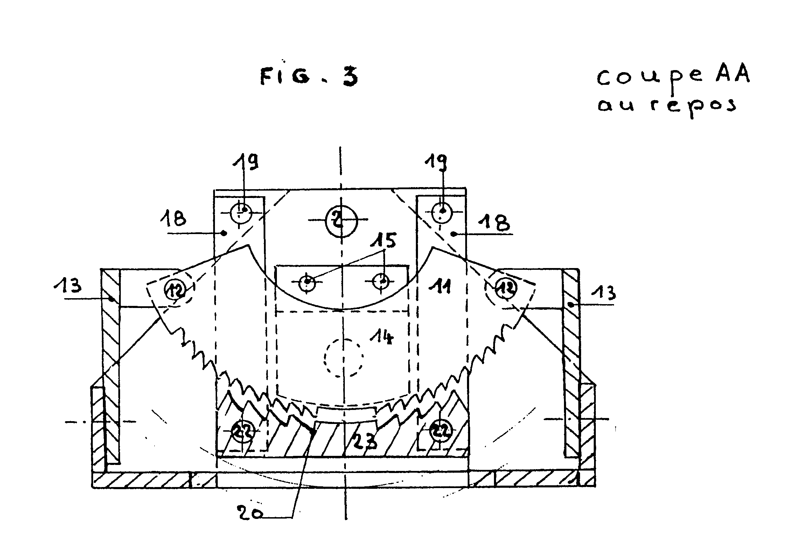

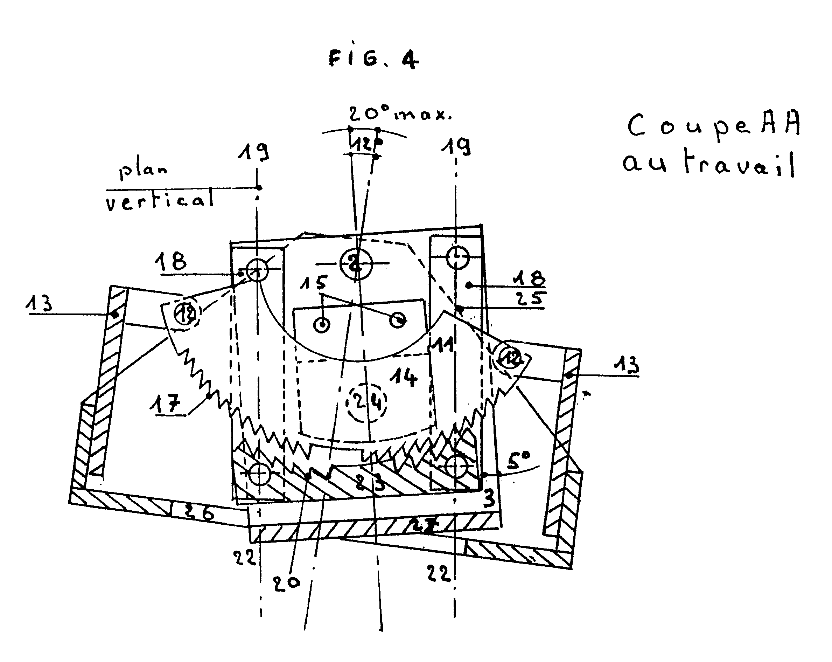

Conformément à la présente invention selon les figures 1, 2, 3 et 4, ce dispositif de limitation de débattement est constitué d'une pièce suspendue libre (23), par biellettes (18), articulées à deux axes (19), supportés à la partie supérieure de la pièce oscillante (3) et d'une plaque rapportée (21) et suspendue aux biellettes (18) par quatre goujons (22) à la manière d'un parallélogramme déformable.

La dite pièce (23) comportant une surface supérieure incurvée pourvue d'une denture (20) coopérant avec la denture inférieure (17) d'un secteur (11) solidaire de la pièce fixe (1).

La partie incurvée (23) de la pièce oscillante (3) et le secteur (11) étant centrés sur l'axe de rotation (2) de l'ensemble, les axes d'articulation (19) des biellettes (18) étant situés de part et d'autres de l'axe de rotation (2) de l'ensemble et situé de préférence sensiblement au même niveau que ce dernier.

Le dispositif de limitation de débattement intervient lorsque le conducteur du véhicule provoque une inclinaison latérale du siège. Le mouvement dès son amorce, provoque la rotation de la pièce oscillante (3) autour de son axe (2) laquelle entraîne dans ce mouvement le déplacement des axes de rotation supérieurs (19), des biellettes (18), l'un vers le haut, l'autre vers le bas entrainant la pièce suspendue libre (23), qui par son inertie maintient les biellettes (18) en position verticale.

Le fait que la denture de la pièce libre (23) s'enclanche dans celle du secteur (17) provoque un blocage du mouvement de rotation de la pièce oscillante.

Le blocage se produit quelle que soit la position du secteur (11) solidaire de la pièce fixe (1) suivant l'inclinaison latérale du véhicule.

Afin que l'opération puisse se réaliser, la denture (17) du secteur (11), et celle de la pièce suspendue (23) est partagée en deux parties symétriques par rapport à l'axe vertical ; taillées chacune avec une inclinaison d'orientation opposée dont les parties en vis à vis comportent des tailles de sens opposé et de pas différents, la pièce incurvée (23) présentant une denture (20) d'un pas supérieure à celui de la denture (17) du secteur denté (11).

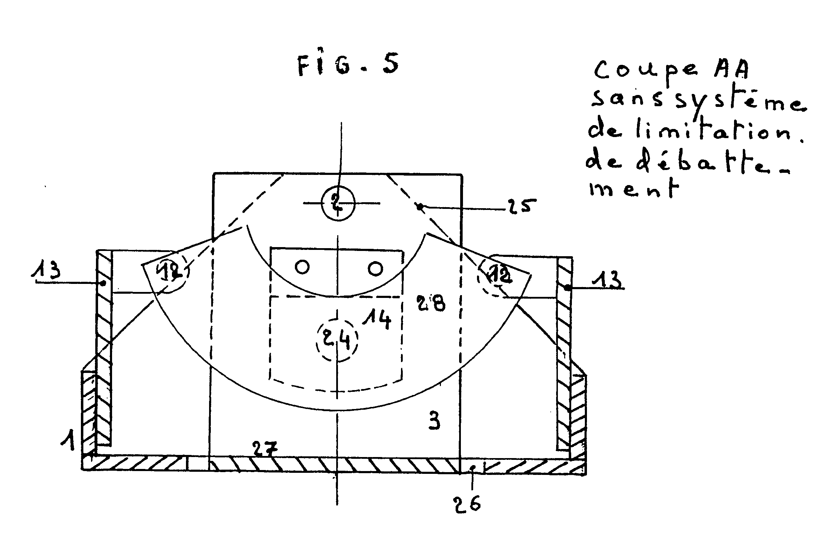

Le dispositif de limitation de débattement ne se manifeste que lorsqu'il y a déséquilibre du siège. Pour freiner le mouvement lors d'une inclinaison, le dispositif de support de siège est équipé selon la figure 5 d'un système de ralentissement d'oscillations à friction composé de plaquettes (14) qui agissent en appui sur les surfaces de friction latérales (10) aménagées sur le secteur denté (11) ou non (28) disposé verticalement à l'intérieur de la pièce oscillante (3) et relié par 2 tiges (12) à deux supports (13) solidaires de la pièce fixe (1).

Le secteur denté (11) ou non (28) est monté coulissant latéralement sur les tiges (12) et se déplace horizontalement sous l'action d'une pression exercée sur l'axe des plaquettes (14) par un dispositif de manoeuvre (16) commandé éventuellement à distance.

Les plaquettes (14) logées dans la pièce oscillante (3) sont montées libres disposées de part et d'autre du secteur (11) guidées par 2 tiges horizontales (15) sur lesquelles l'une d'elle coulisse, l'autre restant appuyée sur une butée (24).

Afin de réduire l'encombrement du dispositif de limitation de débattement et celui du ralentisseur d'oscillations, le premier peut être intégré dans le second tout en conservant l'indépendance d'efficacité des deux dispositifs.

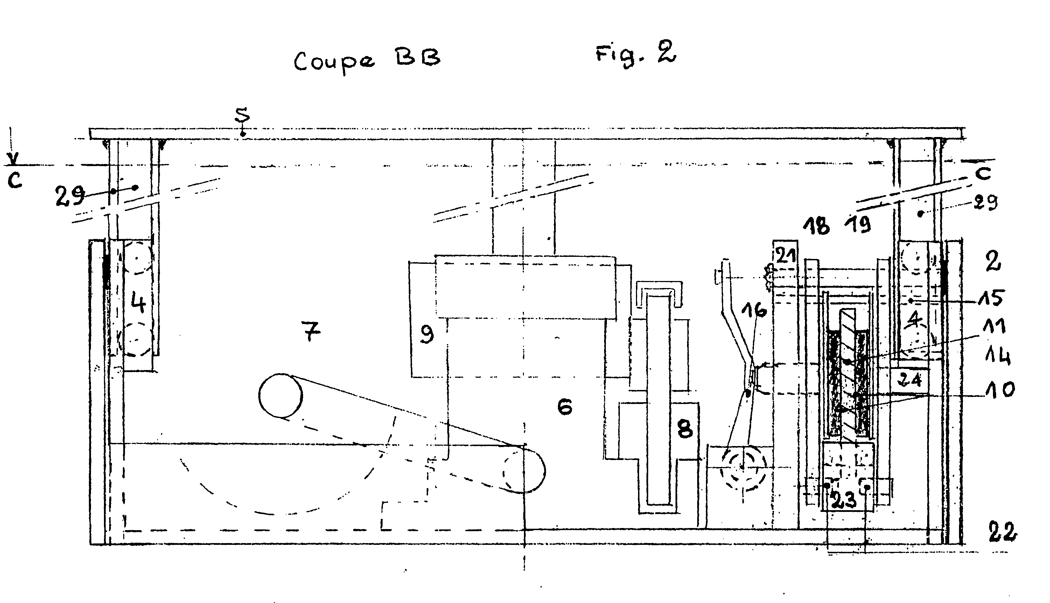

pour permettre aux différents utilisateurs de se trouver à la même hauteur d'assise selon les figures 1 et 2, le cylindre de suspension (6) relié à l'accumulateur (7) est équipé d'un réservoir à liquide (9) relié à une pompe (8) aspirant dans le dit réservoir, pour alimenter le cylindre et agir sur la pression dans l'accumulateur (7).

Cela permet de réduire le volume de l'accumulateur par apport de liquide, ce qui a pour effet de faire varier la pression dans l'accumulateur (7) et d'amener celle ci en équilibre avec le poids de l'utilisateur assis sur son siège.

Pour que l'utilisateur puisse connaître le degré d'intervention qu'il a à exercer sur la pompe (8), une signalisation à graduation ou à voyants lumineux est mise à sa disposition.

Le guidage aménagé dans la pièce oscillante (3) et le verrouillage de rotation du plateau porte siège (5) selon la figure 2 sont assurés par un système de guidage à billes (4) aménagé sur les parois de la pièce oscillante (3) renforcée, sur lequel coulissent les guides (29), rendus solidaires du plateau porte siège (5). Le dispositif support de siège comportant une pièce fixe (1) supportant la pièce oscillante (3) en forme de U selon la figure 1 et 5 est découpée triangulairement en partie supérieure (25) où est aménagé le système de pivotement vertical (2), sa base comportant un évidement (26) dans lequel vient prendre place la base (27) de la pièce oscillante (3).

L'invention n'est pas limitée à la forme de réalisation représentée et décrite en détail car diverses modifications peuvent y être apportées sans sortir de son cadre.

## Revendications

1.  Dispositif de support de siège pour véhicule tout terrain, ou autres, permettant au conducteur de conserver une station horizontale constante quelle que soit l'inclinaison latérale du véhicule par système à stabilisation pendulaire comportant d'une part, une pièce support d'ensemble (1) destinée à être fixée au chassis ou à une assise du véhicule, et une pièce oscillante (3) aménagée à l'intérieur de la pièce support d'ensemble, reliées entre elles par articulation de pivotement (2), situé à la partie supérieure des 2 pièces en forme de U, et d'autre part, d'une suspension de type hydropneumatique (6) combiné ou non avec des moyens de guidage (4) en coulissement vertical ; d'un système ralentisseur d'oscillations interposé entre les deux ensembles.

Caractérisé par la présence d'un dispositif de limitation de débattement par rapport à l'horizontale, constitué d'une pièce èquipée de quatre goujons (22) suspendue libre (23) par quatre biellettes (18) articulées à deux axes (19) aménagés à la partie supérieure de la pièce oscillante (3) et d'une plaque rapportée (21) à la manière d'un parallélogramme déformable.

La dite pièce (23) comportant une surface supérieure incurvée pourvue d'une denture (20) coopérant avec la denture inférieure (17) d'un secteur (11) solidaire de la pièce fixe (1).

La partie incurvée de la pièce oscillante (3) et le secteur (11) étant centré sur l'axe de rotation (2) de l'ensemble.

2. Dispositif selon la revendication (1) caractérisé en ce que la denture (17) du secteur (11), et de la pièce suspendue (23) est partagée en deux parties par rapport à l'axe vertical et taillées chacune avec une inclinaison d'orientation opposée dont les parties en vis à vis comportent des tailles de sens opposé.

3. Dispositif selon la revendication 2 caractérisé en ce que la pièce incurvée (23) présente une denture (20) d'un pas supérieur à celui de la denture (17) du secteur denté (11).

4. Dispositif de support de siège selon la revendication 1, 2 et 3 caractérisé en ce que le dispositif de limitation de débattement est intégré dans l'ensemble du système de ralentissement d'oscillations.

5. Dispositif selon la revendication (1) ou (4) caractérisé en ce que le ralentissement d'oscillations à friction composé de plaquettes (14) est en appui réglable sur des surfaces de friction (10) formant les faces latérales du secteur denté (11) ou non (28) disposé verticalement à l'intérieur de la pièce oscillante (3) et qui est aménagé coulissant horizontalement sur deux tiges cylindriques(12) disposées sur deux supports (13) solidaires de la pièce fixe (1), et en ce que les plaquettes (14) logées dans la pièce oscillante (3) sont montées libres, disposées de part et d'autre du secteur (11) ou (28) guidées par 2 tiges horizontales (15) sur lesquelles l'une d'elle coulisse ; actionnée par un dispositif de manoeuvre (16) commandé éventuellement à distance alors que l'autre reste appuyé sur une butée (24).

6. Dispositif de suspension selon la revendication (1) du type avec cylindre de suspension (6) relié à un accumulateur pneumatique (7) caractérisé en ce que le cylindre est équipé d'une pompe (8) reliée à un réservoir à liquide (9) permettant de faire varier la pression dans l'accumulateur (7) et d'amener l'utilisateur à une hauteur constante quel que soit son poids.

7. Dispositif de suspension selon la revendication 6 caractérisé en ce qu'il est équipé d'un élément de contrôle de la hauteur d'assise de référence à graduations ou à signalisation par voyants lumineux.

8. Dispositif de support de siège selon la revendication 1 caractérisé en ce qu'il comporte un dispositif de guidage et de verrouillage de rotation du plateau porte siège, aménagé dans la pièce oscillante (3) renforcée, comportant des systèmes à billes (4) aménagés sur les parois de la pièce oscillante (3).

9. Dispositf de support de siège selon la revendication (1) caractérisé en ce que la pièce fixe a ses flancs découpés triangulairement en partie supérieure (25) où est aménagé le système de pivotement vertical (2), la base comportant un évidement (26) dans lequel la base (27) de la pièce oscillante (3) suspendue en rotation par sa partie supérieure au système de pivotement (2) est encastrée dans l'évidement (26) de la pièce support.

10. Dispositif de support de siège selon la revendication (1) caractérisé en ce que les axes d'articulation supérieurs (19) des biellettes sont sensiblement disposés au même niveau de l'axe d'articulation de l'ensemble.

Coupe CC

B

Fig. 1

EP 0 437 130 A1

Coupe BB Fig. 2

EP 0 437 130 A1

FIG. 3

coupe AA
au repos

EP 0 437 130 A1

FIG. 4

Coupe AA au travail

EP 0 437 130 A1

FIG. 5

Coupe AA
sans système
de limitation.
de débatte_
ment

EP 0 437 130 A1

Office européen
des brevets

**RAPPORT DE RECHERCHE EUROPEENNE**

Numero de la demande

EP    90 40 3619

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-1655372 (TAYLOR) <br> * figure 1 * | 1 | B60N2/38 |
| A | DE-A-2709123 (ÖSTBERGS FABRIKS) <br> * figure 1 * | 1 | |
| A | FR-A-2061931 (EMPIS) <br> * figures 1, 2 * | 1 | |
| A | US-A-2984290 (MILLER) <br> * figure 3 * | 1 | |
| A | FR-A-2618392 (HENRY) <br> * figure 5 * | 1 | |
| D,A | FR-A-2603533 (MOLINIER ET AL.) <br> * figure 1 * | 1 | |
| A | DE-A-1655548 (VUICHARD) <br> * revendication 1; figure * | 6 | |
| A | DE-U-1986367 (BREMSHEY & CO.) <br> * revendication 1; figure 1 * | 6 | DOMAINES TECHNIQUES RECHERCHES (Int. Cl.5) |
| A | DE-U-7027253 (UNIVERSAL OIL PRODUCTS COMPANY) <br> * revendication 1; figure 1 * | 6 | B60N |

Le présent rapport a été établi pour toutes les revendications

| Lieu de la recherche | Date d'achèvement de la recherche | Examinateur |
|---|---|---|
| BERLIN | 22 MARS 1991 | BECKER W.D.H. |